(19) Europäisches Patentamt
European Patent Office
Office européen des brevets

(11) Veröffentlichungsnummer: **0 322 640 B1**

(12) **EUROPÄISCHE PATENTSCHRIFT**

(45) Veröffentlichungstag der Patentschrift: **13.05.92**

(51) Int. Cl.[5]: **C09B 33/04**, D06P 1/40

(21) Anmeldenummer: **88120875.5**

(22) Anmeldetag: **14.12.88**

Die Akte enthält technische Angaben, die nach dem Eingang der Anmeldung eingereicht wurden und die nicht in dieser Patentschrift enthalten sind.

(54) **Azofarbstoff.**

(30) Priorität: **24.12.87 DE 3744003**

(43) Veröffentlichungstag der Anmeldung:
**05.07.89 Patentblatt 89/27**

(45) Bekanntmachung des Hinweises auf die Patenterteilung:
**13.05.92 Patentblatt 92/20**

(84) Benannte Vertragsstaaten:
**CH DE FR GB LI**

(56) Entgegenhaltungen:
**FR-A- 469 457**

**COLOR INDEX, Band 4, 1971, Seite 4151, Nr. 20530, Society of Dyers and Colourists, Bradford, GB**

(73) Patentinhaber: **BAYER AG**

**W-5090 Leverkusen 1 Bayerwerk(DE)**

(72) Erfinder: **Laser, Joachim, Dr.**
**Piet-Mondrian-Strasse 166**
**W-5090 Leverkusen 1(DE)**
Erfinder: **Paulat, Volker, Dr.**
**Menzelweg 1**
**W-4019 Monheim(DE)**
Erfinder: **Gomm, Walter, Dr.**
**Johann-Burum-Strasse 21**
**W-5060 Bergisch Gladbach 1(DE)**

**EP 0 322 640 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein neuer Azofarbstoff der in Form der freien Säure der Formel

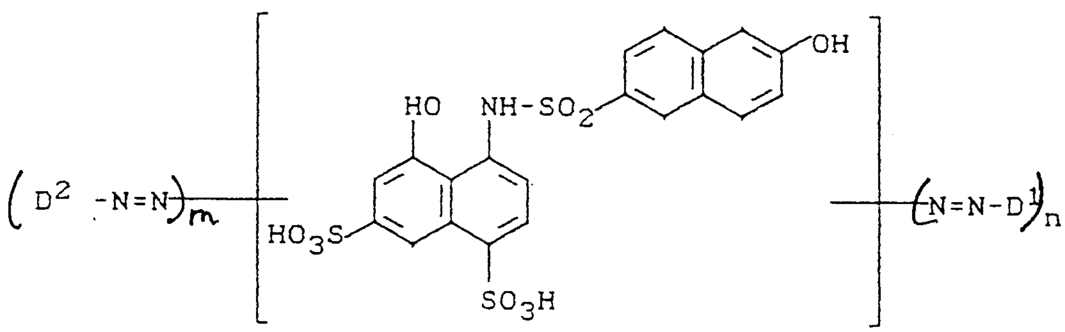

entspricht,
worin

$D^1$ = 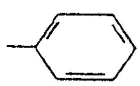 ,

$D^2$ = 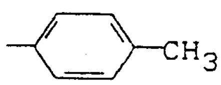 und

n und m eine Zahl zwischen 0.6 und 1,4 darstellen, wobei die Summe n + m = 2 ist.

Vorzugsweise stehen n und m für eine Zahl zwischen 0.8 und 1.2.

Der neue Farbstoff zeichnet sich durch eine verbesserte Löslichkeit in Wasser gegenüber dem bekannten Farbstoff C.I. Acid Red 158 aus, der anstelle der p-Toluidin-Komponente einen o-Toluidin-Rest aufweist.

Der erfindungsgemäße Farbstoff ist sehr farbstark und eignet sich zum Färben von Wolle und Polyamid nach üblichen Methoden. Man erhält brillante rote Färbungen mit guten Naßechtheiten.

Die Herstellung des Farbstoffs erfolgt nach an sich bekannten Methoden (vgl. DE 274 081 und BIOS 1 548 85) durch Diazotierung entsprechender Mengen von Anilin und Toluidin und Kupplung auf 1-(2′-Hydroxynaphthalin-6′-sulfamido)-8-naphthol-4,6-disulfonsäure, wobei die Diazokomponenten im Gemisch oder in beliebiger Reihenfolge nacheinander mit der Kupplungskomponente vereinigt werden können.

Der Farbstoff wird vorzugsweise in Form seines Natriumsalzes eingesetzt, kann aber auch als Kalium-, Lithium-oder Ammoniumsalz Verwendung finden.

Als Handelsform kommt selbstverständlich nicht der analysenreine Farbstoff, sondern eine Farbstoffpräparation zur Anwendung, die neben produktionsbedingten Verunreinigungen sowie Stellmitteln, Entstaubungsmitteln und dergleichen die Farbstoffkomponente enthält, die wiederum zumindest zu 90 Gew.-% aus dem Farbstoff der Formel I besteht. Diese Präparation ist ebenfalls Gegenstand der vorliegenden Erfindung.

<u>Beispiel 1</u>

In 5000 ml Wasser werden 650 g 1-(2′-Hydroxynaphthalin-6′-sulfamido)-8-hydroxy-napthalin-4,6-disulfonsäure durch Zugabe von Natronlauge bei pH = 9 gelöst (Kupplungskomponente). Ein Gemisch aus 1500 ml Wasser, 780 ml Salzsäure (ca. 30 Gew.-%ig), 135 ml Anilin und 155 g p-Toluidin wird bei ca. 0 ° C mit 650 ml Na-nitritlösung (30 g/100 ml) diazotiert. Nach Entfernung des Nitritüberschusses mit Amidosulfonsäure wird die Diazotierung zur Lösung der Kupplungskomponente gegeben. Dabei wird der pH-Wert durch Zugabe von Sodalösung bei pH = 9 gehalten.

Nach beendeter Kupplung wird bei 65 ° C mit ca. 1000 g Kochsalz ausgesalzen, isoliert und getrocknet.

Man erhält ca. 1400 g eines roten Farbstoffes ($\lambda_{max}$:514 nm) mit guter Löslichkeit.

Beispiel 2

Man verfährt wie in Beispiel 1, diazotiert und kuppelt aber nacheinander p-Toluidin und anschließend Anilin.

Man erhält ein rotes Farbstoffpulver ($\lambda_{max}$: 476 nm) mit vergleichbar guten Eigenschaften wie in Beispiel 1.

**Patentansprüche**

**1.** Azofarbstoff der in Form der freien Säure der Formel

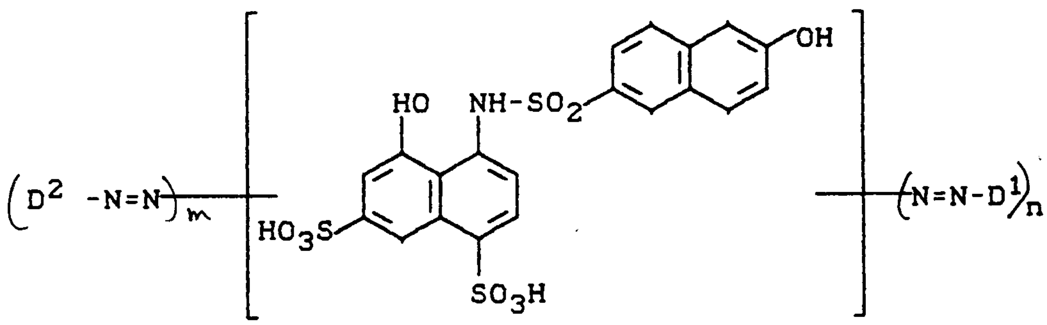

entspricht,
worin

$D^1$ =

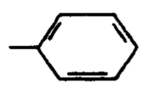

,

$D^2$ =

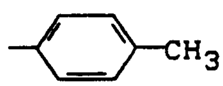

und

n und m = eine Zahl zwischen 0.6 und 1,4, wobei die Summe n + m = 2 ist.

**2.** Verwendung des Farbstoffs gemäß Beispiel 1 zum Färben von Wolle und Polyamid.

**3.** Farbstoffpräparation, deren Reinfarbstoffanteil zu mindestens 90 Gew.-% aus dem Farbstoff der Formel gemäß Anspruch 1 besteht.

## Claims

**1.** Azo dyestuff which, in the form of the free acid, conforms to the formula

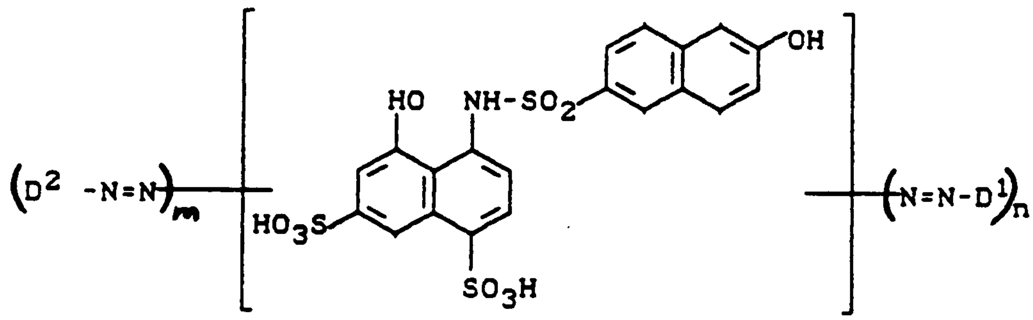

in which

$D^1$ is 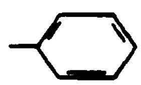

$D^2$ is 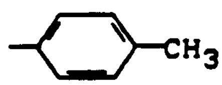 and

n and m represent a number between 0.6 and 1.4, the sum n + m being 2.

**2.** Use of the dyestuff according to Example 1 for the dyeing of wool and polyamide.

**3.** Dyestuff formulation whose pure dyestuff content consists of at least 90% by weight of the dyestuff of the formula according to Claim 1.

**Revendications**

**1.** Colorant azoïque qui, à l'état d'acide libre, répond à la formule

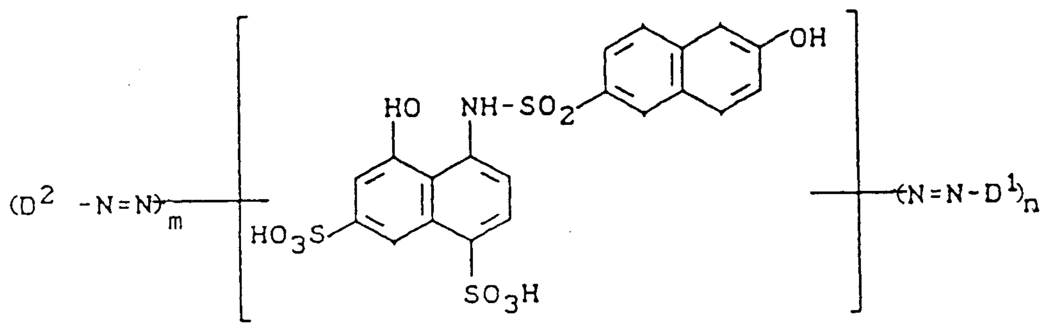

dans laquelle

$D^1$ = 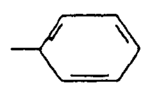 ,

$D^2$ = 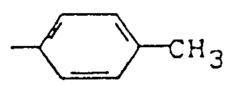 et

n et m sont des nombres allant de 0,6 à 1,4 et la somme n + m est égale à 2.

**2.** Utilisation du colorant de l'exemple 1 pour la teinture de la laine et des polyamides.

**3.** Composition de colorant contenant au moins 90 % en poids du colorant de formule donnée dans la revendication 1 à l'etat pur.